# FASCICULE DE BREVET EUROPEEN

(11) **EP 0 681 191 B1**
(45) Date de publication et mention de la délivrance du brevet: **13.01.1999**
(21) Numéro de dépôt: 95400929.6
(22) Date de dépôt: 25.04.1995
(51) Int. Cl.: G01S 13/524

(54) **Procédé et dispositif d'élimination des échos fixes en fréquence intermédiaire dans un radar à impulsions cohérentes**
Verfahren und Vorrichtung zum Festechounterdrücken in der Zwischenfrequenz für ein kohärentes Pulsradar
Method and apparatus for eliminating fixed echoes at intermediate frequency in a coherent pulsed radar

(30) Priorité: 03.05.1994 FR 9405374
(43) Date de publication de la demande: 08.11.1995
(73) Titulaire: THOMSON-CSF, 75008 Paris (FR)
(72) Inventeur: Bian, Gilbert, F-92402 Courbevoie Cedex (FR); Garrec, Patrick, F-92402 Courbevoie Cedex (FR); Lemonnier, Hervé, F-92402 Courbevoie Cedex (FR); Louedec, Patrick, F-92402 Courbevoie Cedex (FR)
(74) Mandataire: Beylot, Jacques

(56) Documents cités:
- US-A- 4 015 260
- US-A- 4 217 584
- US-A- 5 061 934
- IEEE AEROSPACE AND ELECTRONIC SYSTEMS MAGAZINE, vol. 8, no. 10, Octobre 1993 NEW YORK US, pages 10-14, XP 000413523 MOYER ET AL. 'Analog Clutter Cancellation Algorithms for Dynamic Range Reduction 413523'

## Description

La présente invention concerne la détection de cibles mobiles en présence de cibles fixes à l'aide d'un radar émettant des impulsions cohérentes présentant toutes, au cours d'une salve, le même déphasage à l'origine par rapport à leur porteuse de modulation.

En réponse à une illumination par une salve d'impulsions cohérentes, une cible retourne en écho la salve d'impulsions en conservant ou non leur cohérence selon qu'elle est fixe ou mobile car l'effet Doppler du au déplacement radial d'une cible par rapport à la source d'impulsions provoque l'apparition d'un déphasage d'impulsion à impulsion. Ainsi, le signal reçu en retour, en réponse à l'émission de chaque impulsion cohérente d'une salve, qui résulte de la superposition de réponses de cibles fixes et mobiles, présente une composante invariante d'impulsion à impulsion due aux cibles fixes et une composante qui fluctue en phase d'une impulsion à l'autre et qui est due aux cibles mobiles.

Pour la mise en évidence des cibles mobiles, la composante invariante du signal de réception en écho d'une impulsion d'interrogation, due aux cibles fixes illuminées, est une gêne, cela d'autant plus que son niveau est souvent très supérieur à celui de la composante variable du signal de réception due aux cibles mobiles. Il est usuel de tenter de la supprimer ou tout au moins de l'affaiblir avant d'exploiter le signal de réception, en jouant sur le fait qu'elle se retrouve à l'identique dans tous les échos en réponse aux impulsions d'une salve alors que la composante due aux cibles mobiles fluctue en phase d'un écho à l'autre. Une manière de faire classique consiste, avant d'exploiter le signal reçu et de le traiter pour séparer les cibles en distance et éventuellement en vitesse, à soustraire du signal reçu en réponse à l'émission d'une impulsion, le signal reçu en réponse à une impulsion émise précédemment. Cette opération qui permet d'éliminer les échos fixes se fait, en règle générale, à l'aide d'une ligne à retard qui retarde le signal de réception d'une période de répétition des impulsions et d'un soustracteur. La ligne à retard peut être analogique elle opère alors en bande de fréquence intermédiaire. Elle peut aussi être numérique et opérer en bande de fréquence vidéo.

La présence d'une composante parasite à fort niveau dans le signal de réception due aux échos de cible fixe pose des problèmes de saturation du démodulateur qui fournit le signal vidéo et des convertisseurs analogique-numérique utilisés pour permettre un traitement numérique en vue de détecter les cibles. Il est donc avantageux de procéder à l'élimination ou tout au moins à la réduction des échos des cibles fixes en bande de fréquence intermédiaire.

Un procédé pour éliminer les échos des cibles fixes en bande de fréquence intermédiaire décrit dans le brevet français FR-A-2.687.479, correspondant à la demande EP 557 160, consiste à engendrer une réplique, en bande de fréquence intermédiaire, du signal reçu en réponse à la première impulsion d'une salve en échantillonnant, après démodulation, l'amplitude de ce signal mesurée selon une échelle logarithmique et sa phase, et en synthétisant la réplique par modulation en amplitude et phase de la porteuse de fréquence intermédiaire à l'aide des échantillons obtenus, et à soustraire, en bande de fréquence intermédiaire, cette réplique à chacun des signaux reçus en réponse aux impulsions ultérieures de la salve.

Ce procédé d'élimination des échos de cibles fixes a l'avantage de ne pas utiliser de ligne à retard analogique à délai égal à la période de répétition des impulsions dont la réalisation est délicate et dont l'insertion entraîne des phénomènes d'atténuation et de distorsions difficiles à maîtriser. Cependant, il peut arriver, en présence de forts échos de cibles fixes, une certaine saturation entraînant la formation d'une réplique assez grossière à la première impulsion de la salve.

La présente invention a pour but de lutter contre cet inconvénient en formant la réplique à la réponse à la première impulsion d'une salve en procédant par approximations successives, grâce à un processus itératif basé sur un premier échantillonnage portant sur la réponse à la première impulsion puis sur un deuxième échantillonnage portant sur l'erreur subsistant entre la réponse à la première impulsion et une réplique provisoire synthétisée à partir du premier échantillonnage, et sur une combinaison des deux échantillonnages pour établir une réplique affinée de la réponse à la première impulsion.

Elle a pour objet un procédé pour éliminer les échos de cibles fixes, en fréquence intermédiaire, dans un radar à impulsions cohérentes, dans lequel une réplique à la réponse, en bande de fréquence intermédiaire, à la première impulsion d'une salve est soustraite à la réponse, en bande de fréquence intermédiaire, à chacune des impulsions ultérieures de la salve. Ce procédé est remarquable en ce qu'il consiste :
- à effectuer un premier échantillonnage, après démodulation, de l'amplitude en échelle logarithmique et de la phase du signal reçu en réponse à la première impulsion d'une salve et à synthétiser, en bande de fréquence intermédiaire, une esquisse de réplique à ce signal,
- à soustraire, en bande de fréquence intermédiaire, l'esquisse de réplique au signal reçu en réponse à la première impulsion retardé du temps nécessaire à l'élaboration de l'esquisse de réplique pour obtenir un signal d'erreur de modélisation,
- à effectuer un deuxième échantillonnage, après démodulation, de l'amplitude en échelle logarithmique et de la phase du signal d'erreur de modélisation,
- à synthétiser à partir des premier et deuxième échantillonnages une réplique affinée, en bande de fréquence intermédiaire, du signal reçu en réponse à la première impulsion d'une salve, et
- à soustraire cette réplique affinée de chacun des signaux reçus en réponse aux impulsions ultérieures de la salve.

La synthèse, en bande de fréquence intermédiaire, d'une réplique affinée du signal reçu en réponse à la première impulsion d'une salve peut se faire à partir d'une nouvelle série d'échantillons d'amplitude et de phase résultant d'une combinaison des échantillons du signal reçu en réponse à la première impulsion et des échantillons du signal d'erreur de modélisation ou par addition de deux composantes synthétisées séparément: l'esquisse de réplique déterminée à partir des échantillons du signal reçu en réponse à la première impulsion d'une salve et un signal correctif déterminé à partir des échantillons du signal d'erreur de modélisation.

L'invention a également pour objet des dispositifs de mise en oeuvre du procédé précité.

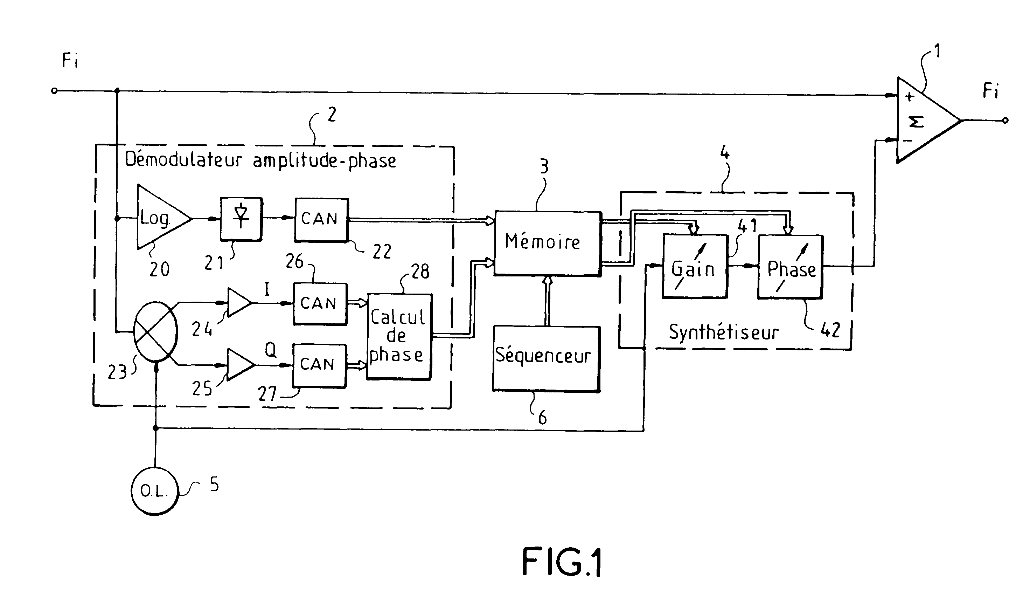

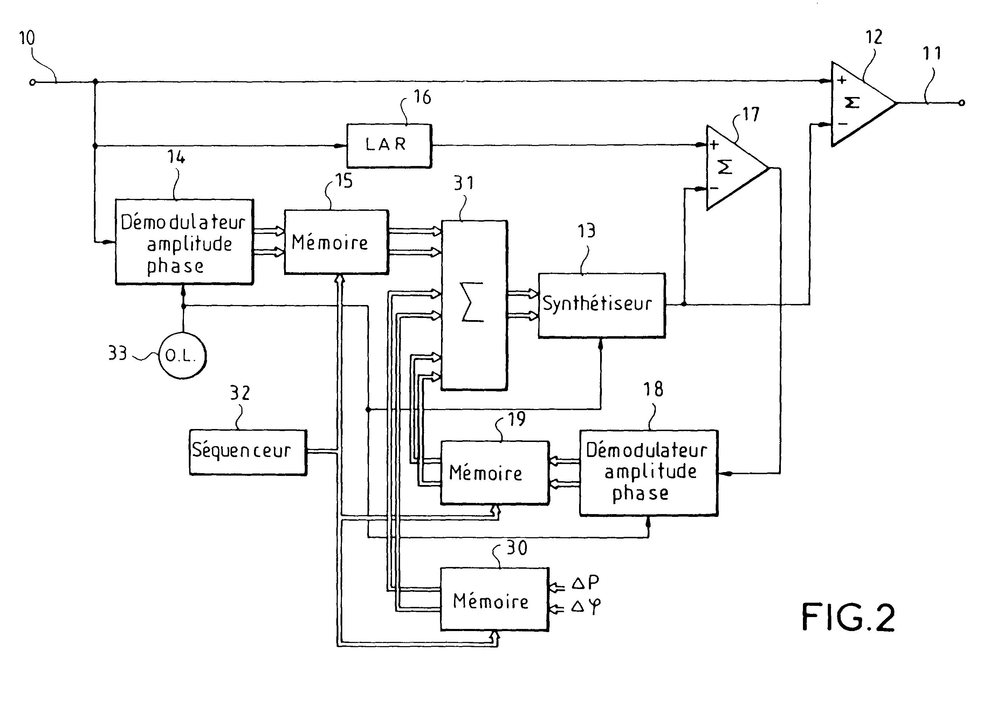

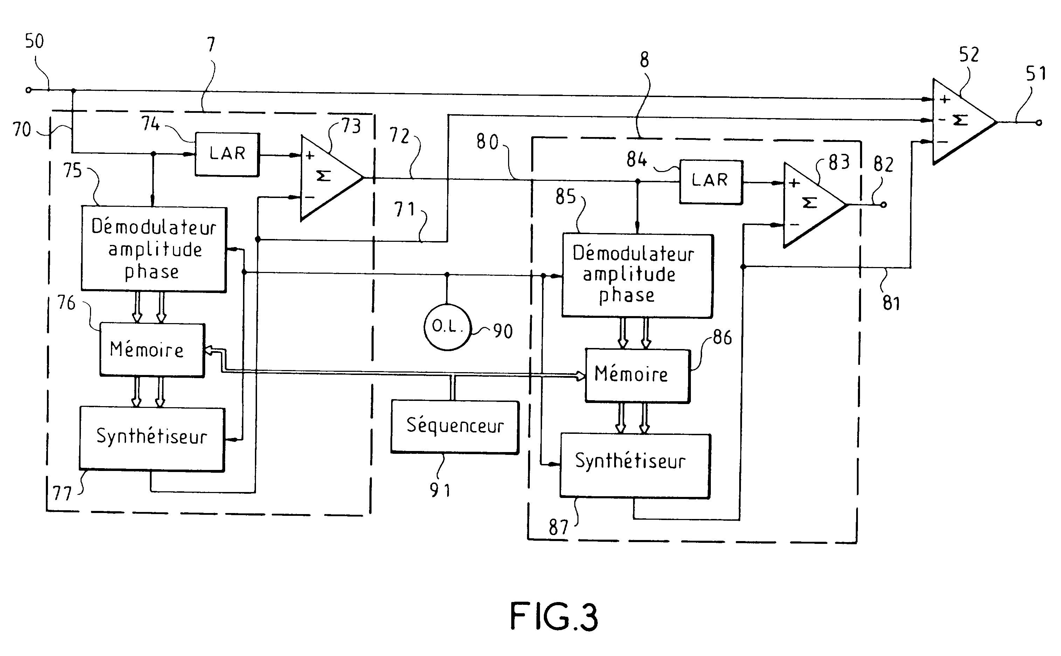

D'autres caractéristiques et avantages de l'invention ressortiront de la description ci-après de modes de réalisation donnés à titre d'exemple. Cette description sera faite en regard du dessin dans lequel:
- une figure 1 représente un circuit d'élimination d'échos de cibles fixes, en fréquence intermédiaire, à simple annulation de type connu ;
- une figure 2 représente un circuit d'élimination d'échos de cibles fixes, en fréquence intermédiaire, à double annulation, selon l'invention ; et
- une figure 3 représente un autre circuit d'élimination d'échos de cibles, en fréquence intermédiaire, à double annulation, selon l'invention.

La figure 1 montre la synoptique d'un circuit d'élimination d'échos de cibles fixes, en fréquence intermédiaire, à simple annulation de type connu décrit dans le brevet français FR-A-2.687.479.

Dans ce circuit d'élimination d'échos fixes, le signal de réception d'un radar émettant des salves d'impulsions cohérentes alors qu'il est en bande de fréquence intermédiaire, c'est-à-dire qu'il module une porteuse autour de 60 MHz, est appliqué d'une part directement à l'entrée additive d'un sommateur 1 et d'autre part par l'intermédiaire d'une chaîne constituée d'un démodulateur amplitude-phase 2, d'une mémoire 3 et d'un synthétiseur 4, à l'entrée soustractive de ce même sommateur 1.

La chaîne constituée du démodulateur amplitude-phase 2, de la mémoire 3 et du synthétiseur 4 permet de synthétiser une réplique en fréquence intermédiaire du signal reçu en réponse à la première impulsion d'une salve et d'engendrer cette réplique en synchronisme avec chacune des réponses aux impulsions ultérieures de la salve.

Le sommateur 1 permet de soustraire en fréquence intermédiaire, à chacune des réponses aux impulsions d'une salve, à l'exception de la première impulsion de chaque salve, une réplique de la réponse en fréquence intermédiaire à la première impulsion de manière à éliminer dans ces réponses la composante invariante d'impulsion à impulsion due aux cibles fixes.

Le démodulateur amplitude-phase 2 comporte une voie de détection d'amplitude avec un amplificateur logarithmique 20 alimentant un détecteur d'enveloppe 21 auquel est raccordé un convertisseur analogique-numérique 22 et une voie de détection de phase constituée d'un démodulateur en quadrature 23 dont les sorties en phase et en quadrature sont traitées par des amplificateurs séparateurs 24, 25 avant d'être appliquées aux entrées de deux convertisseurs analogique-numérique 26, 27 placés aux entrées d'un circuit de calcul de phase 28.

L'utilisation, dans la voie de détection d'amplitude, d'un amplificateur logarithmique permet d'avoir une grande dynamique avec un convertisseur analogique-numérique 22 de faible capacité, par exemple 8 bits, rapide fonctionnant en suréchantillonnage.

Dans la voie de détection de phase, le démodulateur en quadrature 23 reçoit d'un oscillateur local 5 une porteuse de fréquence intermédiaire lui fournissant une référence de phase. Les convertisseurs analogique-numérique 26, 27 sont également des convertisseurs analogique-numérique de faible capacité par exemple 8 bits, rapides, fonctionnant en suréchantillonnage.

Le circuit de calcul de phase est un circuit numérique par exemple une mémoire morte qui fournit la phase instantanée du signal démodulé en quadrature à partir de la valeur de l'arc tangente du rapport de l'amplitude du signal de la voie en quadrature sur l'amplitude du signal de la voie en phase.

La mémoire 3 opère sous la conduite d'un séquenceur 6 de manière à stocker la succession des échantillons d'amplitude et de phase du signal démodulé reçu en réponse à la première impulsion de chaque salve et à délivrer cette succession d'échantillons au synthétiseur 4 en synchronisme avec chacune des réponses aux impulsions ultérieures de la salve.

Le synthétiseur 4 comporte un atténuateur réglable 41 recevant les échantillons d'amplitude en échelle logarithmique et un déphaseur réglable 42 recevant des échantillons de phase opérant l'un et l'autre sur le signal de porteuse de fréquence intermédiaire fourni par l'oscillateur local 5. Le déphaseur réglable peut être un générateur de sinus, cosinus suivi d'un modulateur en quadrature piloté par l'oscillateur local 5 tandis que l'atténuateur réglable peut être constitué d'un amplificateur logarithmique commandé par un convertisseur numérique-analogique.

Avec un tel système, l'annulation des échos fixes se fait en bande de fréquence intermédiaire, à l'aide d'une réplique de la réponse à la première impulsion de chaque salve stockée en bande vidéo sous la forme d'un ensemble de paires d'échantillons d'amplitude mesurée en échelle logarithmique et de phase.

Le stockage de la réplique à la première impulsion de chaque salve en bande vidéo alors qu'elle est soustraite en bande de fréquence intermédiaire à chacune des réponses aux impulsions ultérieures d'une salve permet une nette diminution de la cadence d'échantillonnage.

L'utilisation pour le stockage, en bande vidéo, de la réplique à la réponse à la première impulsion d'une salve, d'un ensemble de paires d'échantillons, d'amplitude mesurée en échelle logarithmique et de phase, au lieu de paires d'échantillons des composantes en phase et en quadrature I et Q permet d'être beaucoup moins sensible aux phénomènes de saturation du signal vidéo. Cependant, la réplique définie par ces échantillons est limitée en amplitude et en précision de phase par la précision des convertisseurs analogique-numérique utilisés. En présence de forts échos de cibles fixes, il peut arriver qu'il subsiste une erreur assez importante entre le signal reçu en réponse à la première impulsion d'une salve et sa réplique.

Pour lutter contre cet inconvénient, on propose de former la réplique à la première impulsion d'une salve en procédant par approximations successives selon un processus itératif. Selon ce processus, on procède dans un premier temps à un premier échantillonnage portant sur la réponse à la première impulsion d'une salve et à la synthèse à partir de ce premier échantillonnage d'une esquisse de réplique tout en retardant de manière analogique la réponse à la première impulsion du délai nécessaire à la confection de l'esquisse de réplique. Puis, dans un deuxième temps, on élabore un signal d'erreur de modélisation par soustraction de l'esquisse de réplique à la réponse retardée à la première impulsion, on procède à un deuxième échantillonnage portant sur le signal d'erreur de modélisation et on combine ces deux échantillonnages pour établir une réplique affinée de la réponse à la première impulsion.

Dans ce processus itératif, le phénomène de saturation qui ,peut apparaître au cours de la phase d'échantillonnage de la réponse à la première impulsion d'une salve est très atténué lors de la phase d'échantillonnage du signal d'erreur de modélisation dont l'amplitude est nettement plus faible.

La figure 2 montre le synoptique d'un circuit d'élimination des échos de cibles fixes, en bande de fréquence intermédiaire, à double annulation, mettant en oeuvre un tel processus itératif.

Le signal de réception du radar, disponible en bande de fréquence intermédiaire, est appliqué sur l'entrée 10 et disponible après annulation des échos de cibles fixes sur la sortie 11. A partir de l'entrée 10, il suit trois voies parallèles:
- une première voie le menant directement à l'entrée additive d'un premier sommateur analogique 12 qui délivre le signal de sortie 11 et qui reçoit sur une entrée soustractive des répliques du signal reçu, en bande de fréquence intermédiaire, en réponse à la première impulsion d'une salve synchronisées avec les réponses aux impulsions ultérieures de la salve et élaborées par un synthétiseur 13 à partir de séquences d'échantillons mémorisés de l'amplitude et de la phase du signal reçu en réponse à la première impulsion d'une salve démodulé en bande vidéo,
- une deuxième voie menant par l'intermédiaire d'un démodulateur amplitude-phase 14 à une première mémoire 15 stockant une séquence de paires d'échantillons d'amplitude en échelle logarithmique et de phase définissant, en bande vidéo, une esquisse de réplique du signal reçu en réponse à la première impulsion d'une salve, et
- une troisième voie menant par l'intermédiaire d'une ligne à retard analogique 16 à l'entrée additive d'un deuxième sommateur analogique 17 qui reçoit sur une entrée soustractive l'esquisse de réplique élaborée par le synthétiseur 13 et qui délivre en sortie, en bande de fréquence intermédiaire, un signal d'erreur de modélisation.

La sortie du deuxième sommateur analogique 17 est connectée par l'intermédiaire d'un deuxième démodulateur amplitude-phase 18 à l'entrée d'une deuxième mémoire 19 stockant une séquence de paires d'échantillons d'amplitude en échelle logarithmique et de phase définissant, en bande vidéo, le signal d'erreur de modélisation.

En plus des première et deuxième mémoires 15 et 19, le dispositif comporte une troisième mémoire 30 qui stocke une séquence de paires d'échantillons d'amplitude Δρ en échelle logarithmique et de phase Δφ définissant les décalages d'amplitude et de phase du démodulateur du circuit discriminateur amplitude phase du radar qui fait suite au dispositif d'annulation d'écho fixe et qui n'a pas été représenté. Ces décalages d'amplitude et de phase sont mesurés à la réception du bruit radar dans des cases distance suffisamment éloignées pour que les échos en retour des impulsions d'interrogation soient négligeables.

Les trois mémoires 15, 19 et 30 sont connectées en sortie lecture de données, aux entrées du synthétiseur 13 par l'intermédiaire d'un double sommateur 31 qui additionne entre eux d'une part les échantillons d'amplitude en tenant compte de leur échelle logarithmique et d'autre part les échantillons de phase. Elles sont pilotées par un séquenceur 32 qui assure leurs écritures et leurs lectures aux moments propices par rapport aux instants d'émission des impulsions composant la salve.

Les deux démodulateurs amplitude-phase 14, 18 sont de même conception que celui 2 du dispositif à simple annulation d'échos de cibles fixes de la figure 1. Ils reçoivent d'un oscillateur local 33 une porteuse de fréquence intermédiaire leur fournissant une référence de phase et délivrent en sortie, sur deux voies distinctes, des échantillons d'amplitude en échelle logarithmique et des échantillons de phase des signaux appliqués à leurs entrées ramenés en bande vidéo.

Le synthétiseur 13 est aussi de même conception que celui 4 du dispositif à simple annulation d'échos de cibles fixes de la figure 1. Il module en amplitude et en phase le signal de l'oscillateur local 33 en respectant les consignes d'amplitude et de phase appliquées à ses entrées.

La ligne à retard 16 retarde le signal reçu du temps, de l'ordre de quelques microsecondes, nécessaire à son traitement par le premier démodulateur amplitude-phase 14 et par le synthétiseur 13, alors que la première mémoire 15 est lue simultanément à son inscription. Le retard permet de synchroniser aux entrées du deuxième sommateur analogique 17, le signal reçu et son esquisse de réplique, afin de les comparer et d'élaborer le signal d'erreur de modélisation.

Le dispositif à double annulation d'échos de cibles fixes qui vient d'être décrit fonctionne de la manière suivante :

Sur la période de réception suivant la première impulsion d'une salve, les échantillons d'amplitude et de phase fournis par le démodulateur amplitude-phase 14 qui définissent une esquisse du signal reçu en réponse à la première impulsion sont stockés dans la mémoire 15 et immédiatement transmis au synthétiseur 13 par l'intermédiaire du double sommateur 31 qui reçoit des échantillons nuls sur ses autres entrées de la part des mémoires 19 et 30 dont la lecture n'est pas autorisée.

En réponse, le synthétiseur 13 délivre, avec un faible retard, de l'ordre de la microseconde, une esquisse de réplique qui est soustraite par le sommateur analogique 17 de la réponse à la première impulsion convenablement retardée dans la ligne à retard 16.

Il en résulte, en sortie du sommateur analogique 17 un signal d'erreur de modélisation qui est ramené en bande vidéo et échantillonné en amplitude et en phase par le démodulateur amplitude-phase 18 pour être stocké sous cette forme dans la mémoire 19.

Le processus d'inscription des mémoires 15 et 19 s'achève pour la durée de la salve quelques microsecondes après la fin du signal reçu en réponse à la première impulsion.

L'inscription de la mémoire 30 se fait en fin de salve après extraction sur des cases distance éloignées des valeurs moyennes de décalage en amplitude et en phase du démodulateur du récepteur du radar.

Après l'émission de la deuxième impulsion et de chaque impulsion ultérieure de la salve, le synthétiseur 13 reçoit du double sommateur 31 une double sommation des séquences d'échantillons d'amplitude et de phase lues dans les mémoires 15, 19 et 30 de manière à engendrer, en synchronisme avec chaque signal reçu en réponse à une impulsion, une réplique affinée de la réponse à la première impulsion affectée des décalages d'amplitude et de phase du démodulateur du récepteur du radar, réplique affinée qui est soustraite de chaque signal reçu en réponse à une impulsion par le sommateur analogique 12.

La figure 3 montre le synoptique d'un autre circuit d'élimination des échos des cibles fixes, en bande de fréquence intermédiaire, à double annulation résultant de la mise en cascade de deux circuits identiques à simple annulation.

Le signal de réception du radar, disponible en bande de fréquence intermédiaire, est appliqué sur l'entrée 50 et disponible après annulation des échos des cibles fixes sur la sortie 51. Dès l'entrée, il suit deux voies parallèles:
- une première voie le menant directement à l'entrée additive d'un premier sommateur analogique 52 qui reçoit sur deux entrées soustractives des composantes qui modélisent par addition une réplique au signal reçu, en bande de fréquence intermédiaire, en réponse à la première impulsion d'une salve, synchronisées avec les réponses aux impulsions ultérieures de la salve et engendrées à partir de deux circuits identiques 7 et 8 dits de simple annulation, et
- une deuxième voie où il excite en cascade les circuits à simple annulation 7 et 8 engendrant les composantes dont la somme modélise une réplique au signal reçu, en bande de fréquence intermédiaire, en réponse à la première impulsion d'une salve.

Chaque circuit à simple annulation 7, 8 présente une entrée 70, 80 de signal à modéliser, une sortie 71, 81 de signal modélisé et une sortie 72, 82 de signal d'erreur de modélisation.

L'entrée 70, 80 de signal à modéliser est connectée d'une part à l'entrée additive d'un sommateur analogique 73, 83 par l'intermédiaire d'une ligne à retard analogique 74, 84 compensant des temps de transit et d'autre part à l'entrée soustractive de ce même sommateur analogique 73, 83 par l'intermédiaire d'une chaîne constituée d'un démodulateur amplitude-phase 75, 85, d'une mémoire 76, 86 et d'un synthétiseur 77, 87.

La chaîne constituée du démodulateur amplitude-phase 75, 85 de la mémoire 76-86 et du synthétiseur 77, 87 permet de synthétiser sur la sortie de signal à modéliser 71, 81, une réplique du signal appliqué à l'entrée 70, 80 et de répéter cette réplique à volonté.

Le sommateur analogique 73, 83 qui reçoit à la fois le signal à modéliser et sa réplique synchronisée délivre un signal correspondant au résidu de modélisation sur la sortie 72, 82.

Comme précédemment, les démodulateurs amplitude-phase 75, 85 sont de même conception que celui 2 du dispositif à simple annulation d'échos de cibles fixes de la figure 1. Ils reçoivent d'un oscillateur local 90 une porteuse de fréquence intermédiaire leur fournissant une référence de phase et délivrent en sortie, sur deux voies distinctes, des échantillons d'amplitude en échelle logarithmique et des échantillons de phase des signaux appliqués à leurs entrées ramenés en bande vidéo.

Les synthétiseurs 77, 87 sont aussi de même conception que celui 4 du dispositif à simple annulation d'échos de cibles fixes de la figure 1. Ils modulent en amplitude et en phase le signal de l'oscillateur local 90 en respectant les consignes d'amplitude et de phase leur parvenant de la mémoire 76, 86.

Sous la commande d'un séquenceur 91, la mémoire 76, 86 stocke une séquence de paires d'échantillons d'amplitude et de phase provenant du démodulateur amplitude-phase 75, 85 et correspondant à la période de réception de la réponse à la première impulsion d'une salve, et la transmet immédiatement et périodiquement en synchronisme avec les réponses aux impulsions ultérieures de la salve au synthétiseur 77, 87.

Le premier circuit à simple annulation 7, placé en tête, élabore une esquisse de réplique à la réponse à la première impulsion d'une salve sur sa sortie 71 et délivre un signal d'erreur de modélisation sur sa sortie 72. Le deuxième circuit à simple annulation 8 placé à la suite élabore une réplique au signal d'erreur de modélisation du premier circuit à simple annulation 7 et délivre un nouveau signal d'erreur de modélisation à destination d'un éventuel troisième circuit à simple annulation. L'esquisse de réplique synthétisée par le premier circuit à simple annulation 7 et la réplique de signal d'erreur de modulation synthétisée par le deuxième circuit à simple annulation 8 sont additionnées au niveau des entrées soustractives du sommateur analogique 52 pour former une réplique affinée de la réponse à la première impulsion d'une salve et permettre ainsi une meilleure annulation des échos de cibles fixes qu'avec un seul circuit.

Le fonctionnement est le suivant :

Sur la période de réception suivant la première impulsion d'une salve, les échantillons d'amplitude et de phase fournis par le démodulateur amplitude-phase 75 qui définissent une esquisse du signal reçu en réponse à la première impulsion sont stockés dans la mémoire 76 et immédiatement transmis au synthétiseur 77. En réponse, le synthétiseur 77 délivre avec un faible retard une esquisse de réplique qui est soustraite par le sommateur analogique 73 à la réponse à la première impulsion convenablement retardée dans la ligne à retard 74. Il en résulte, en sortie du sommateur analogique 73 un signal d'erreur de modélisation qui parvient au circuit 8 quelques microsecondes après le début de la réponse à la première impulsion de la salve.

Ce signal d'erreur de modélisation est ramené en bande vidéo et échantillonné en amplitude et phase par le démodulateur amplitude-phase 85 puis, sa séquence de paires d'échantillons est stockée dans la mémoire 86.

Après l'émission de la deuxième impulsion d'une salve, et de chaque impulsion ultérieure les synthétiseurs 77 et 87 reçoivent des séquences de paires d'échantillons d'amplitude et de phase lues dans les mémoires 76 et 86 de manière à engendrer en synchronisme avec chaque signal reçu en réponse à une impulsion, une esquisse de réplique de la réponse à la première impulsion et un signal correctif se combinant sur les entrées soustractives du sommateur analogique 52 pour former une réplique affinée de la réponse à la première impulsion synchrone des réponses aux impulsions ultérieures de la salve auxquelles elle est retranchée.

Le dispositif qui vient d'être décrit relativement à la figure 3 présente l'intérêt d'être conçu autour de deux circuits identiques 7 et 8 à simple annulation et par conséquent de pouvoir être facilement mis en oeuvre à partir de circuits à simple annulation réalisés en série sous une forme hybride et donc d'être à plus faible coût.

## Revendications

1. Procédé pour éliminer les échos de cibles fixes, en fréquence intermédiaire, dans un radar à impulsions cohérentes, dans lequel une réplique de la réponse en bande de fréquence intermédiaire, à la première impulsion d'une salve est soustraite à la réponse en bande de fréquence intermédiaire à chacune des impulsions ultérieures de la salve, caractérisé en ce qu'il consiste :
- à effectuer un premier échantillonnage, après démodulation, de l'amplitude en échelle logarithmique et de la phase du signal reçu en réponse à la première impulsion d'une salve et à synthétiser, en bande de fréquence intermédiaire, une esquisse de réplique à ce signal,
- à soustraire, en bande de fréquence intermédiaire, l'esquisse de réplique au signal reçu en réponse à la première impulsion retardé du temps nécessaire à l'élaboration de l'esquisse de réplique pour obtenir un signal d'erreur de modélisation,
- à effectuer un deuxième échantillonnage, après démodulation, de l'amplitude en échelle logarithmique et de la phase du signal d'erreur de modélisation,
- à synthétiser à partir des premier et deuxième échantillonnages une réplique affinée, en bande de fréquence intermédiaire, du signal reçu en réponse à la première impulsion d'une salve, et
- à soustraire cette réplique affinée de chacun des signaux reçus en réponse aux impulsions de la salve postérieures à la première.

2. Procédé selon la revendication 1, caractérisé en ce que la synthèse de la réplique affinée à partir des premier et deuxième échantillonnages consiste à engendrer un troisième échantillonnage par addition des échantillons de même rang et de même nature des premier et deuxième échantillonnages et à moduler en amplitude et en phase une porteuse à la fréquence intermédiaire par la séquence d'échantillons de ce troisième échantillonnage.

3. Procédé selon la revendication 1, caractérisé en ce que la synthèse de la réplique affinée à partir des premier et deuxième échantillonnages consiste :
- à engendrer une esquisse de réplique par modulation en amplitude et en phase d'une porteuse à la fréquence intermédiaire au moyen de la séquence d'échantillons du premier échantillonnage,
- à engendrer un signal de correction de modélisation par modulation en amplitude et en phase d'une porteuse à la fréquence intermédiaire au moyen de la séquence d'échantillons du deuxième échantillonnage, et
- à additionner en synchronisme l'esquisse de réplique et le signal de correction de modélisation.

4. Dispositif pour éliminer les échos de cibles fixes, en fréquence intermédiaire dans un radar à impulsions cohérentes comportant :
- un premier démodulateur amplitude-phase (14) fournissant des échantillons d'amplitude en échelle logarithmique et de phase du signal d'entrée du dispositif ramené en bande vidéo,
- une première mémoire (15) stockant sous la commande d'un circuit séquenceur (32) une séquence d'échantillons issus du premier démodulateur amplitude-phase (14) correspondant au signal reçu en réponse à la première impulsion d'une salve,
- un oscillateur local (33) fournissant une porteuse à la fréquence intermédiaire,
- un synthétiseur (13) capable de moduler la porteuse de l'oscillateur local (33) en amplitude et en phase au moyen d'une séquence d'échantillons d'amplitude et de phase stockée en mémoire,
- un premier sommateur analogique (12) qui délivre le signal de sortie du dispositif et qui possède une entrée additive sur laquelle il reçoit le signal d'entrée du dispositif et une entrée soustractive sur laquelle il reçoit le signal de sortie du synthétiseur (13), et
- ledit circuit séquenceur (32) commandant la mémoire (15) pour qu'elle soit inscrite pendant la durée du signal reçu en réponse à la première impulsion d'une salve et lue à répétition pendant la durée de chacune des impulsions d'une salve, ledit dispositif étant caractérisé en ce qu'il comporte en outre :
- une ligne à retard (16) connectée en entrée du dispositif retardant le signal reçu du temps nécessaire à son traitement par le premier démodulateur amplitude-phase (14) et par le synthétiseur (13), la première mémoire (15) étant lue simultanément à son inscription,
- un deuxième sommateur analogique (17) qui possède une entrée additive connectée à la sortie de la ligne à retard (16), une entrée soustractive connectée à la sortie du synthétiseur (13) et une sortie sur laquelle il délivre un signal d'erreur de modélisation,
- un deuxième démodulateur amplitude-phase (18) qui est connecté en sortie du deuxième sommateur analogique (17) et qui délivre des échantillons d'amplitude en échelle logarithmique et de phase du signal d'erreur de modélisation ramené en bande vidéo,
- une deuxième mémoire (19) stockant sous la commande du circuit séquenceur (32) une séquence d'échantillons issus du deuxième démodulateur amplitude-phase (18) sur la durée du signal reçu en réponse à la première impulsion retardé du délai de la ligne à retard, et
- un double sommateur (31) intercalé entre les première et deuxième mémoires (15, 19) et le synthétiseur (13).

5. Dispositif selon la revendication 4, caractérisé en ce qu'il comporte en outre une troisième mémoire (30) qui reçoit des valeurs moyennes de décalage en amplitude et en phase du démodulateur du radar et qui est connectée en lecture en parallèle avec les première et deuxième mémoires (15, 19) en entrée du double sommateur (31).

6. Dispositif pour éliminer les échos de cibles fixes, en fréquence intermédiaire dans un radar à impulsions cohérentes comportant des moyens pour élaborer une réplique au signal reçu en fréquence intermédiaire, en réponse à la première impulsion d'une salve et pour répéter ladite réplique en synchronisme avec les signaux reçus, en fréquence intermédiaire, en réponse aux impulsions d'une salve postérieures à la première, et des moyens pour soustraire ladite réplique de chacun des signaux reçus en fréquence intermédiaire, caractérisé en ce qu'il comporte, pour élaborer et répéter ladite réplique une cascade d'au moins deux circuits identiques (7, 8) procédant par approximations successives, fournissant une composante de la réplique, chacun d'eux étant piloté par un oscillateur local (90) et un séquenceur (91), ayant une entrée de signal à modéliser, une sortie de signal modélisé et une sortie de signal d'erreur de modélisation par laquelle ils sont mis en cascade, et comportant :
- un démodulateur amplitude-phase (75, 85) fournissant des échantillons d'amplitude en échelle logarithmique et de phase du signal appliqué à leur entrée de signal à modéliser ramené en bande vidéo,
- une mémoire commandée par le séquenceur (91), stockant une séquence d'échantillons issus du démodulateur amplitude-phase (75, 85) sur la durée du signal reçu en réponse à la première impulsion d'une salve avec un retard compensant les délais de propagation de circuit en circuit,
- un synthétiseur (77, 87) capable de moduler la porteuse de l'oscillateur local (90) en amplitude et en phase par la séquence d'échantillons stockée dans la mémoire et raccordé en sortie à la sortie de signal modélisé du circuit,
- une ligne à retard (74, 84) qui est connectée à l'entrée de signal à modéliser et qui retarde le signal à modéliser du temps nécessaire à son traitement par le démodulateur amplitude-phase (75, 85) et le synthétiseur (77, 87), la mémoire (76, 86) étant lue simultanément à son inscription, et
- un sommateur analogique (73, 83) avec une entrée additive connectée à la ligne à retard (74, 84), une entrée soustractive connectée à la sortie du synthétiseur (77, 87) et une sortie connectée à la sortie de signal d'erreur de modélisation.

## Patentansprüche

1. Verfahren zum Entfernen der Zwischenfrequenz-Echos fester Ziele in einem Radar mit kohärenten Impulsen, bei dem eine Kopie der Antwort im Zwischenfrequenzband auf den ersten Impuls eines Stoßes von der Antwort im Zwischenfrequenzband auf jeden späteren Impuls des Stoßes subtrahiert wird, dadurch gekennzeichnet, daß es darin besteht:
- eine erste Abtastung, nach Demodulation, der Amplitude im logarithmischen Maßstab sowie der Phase des als Antwort auf den ersten Impuls eines Stoßes empfangenen Signals auszuführen und im Zwischenfrequenzband eine Darstellung der Kopie dieses Signals zu synthetisieren,
- im Zwischenfrequenzband die Darstellung der Kopie von dem Signal zu subtrahieren, das als Antwort auf den ersten Impuls empfangen wird, verzögert um die Zeit, die für die Erstellung der Darstellung der Kopie notwendig ist, um ein Modellierungsfehlersignal zu erhalten,
- eine zweite Abtastung, nach Demodulation, der Amplitude im logarithmischen Maßstab und der Phase des Modellierungsfehlersignals auszuführen,
- anhand der ersten und zweiten Abtastung eine verfeinerte Kopie im Zwischenfrequenzband des als Antwort auf den ersten Impuls eines Stoßes empfangenen Signals zu synthetisieren und
- diese verfeinerte Kopie von jedem der Signale zu subtrahieren, die als Antwort auf die dem ersten Impuls nachfolgenden Impulse des Stoßes empfangen werden.

2. Verfahren nach Anspruch 1, dadurch gekennzeichnet, daß die Synthese der verfeinerten Kopie anhand der ersten und der zweiten Abtastung darin besteht, eine dritte Abtastung durch Addition von Abtastwerten gleichen Rangs und gleicher Art der ersten bzw. der zweiten Abtastung zu erzeugen und einen Träger mit der Zwischenfrequenz durch die Abtastwertfolge dieser dritten Abtastung hinsichtlich der Amplitude und der Phase zu modulieren.

3. Verfahren nach Anspruch 1, dadurch gekennzeichnet, daß die Synthese der verfeinerten Kopie anhand der ersten und der zweiten Abtastung darin besteht:
- eine Darstellung der Kopie durch Amplituden- und Phasenmodulation eines Trägers mit der Zwischenfrequenz mittels der Abtastwertfolge der ersten Abtastung zu erzeugen,
- ein Modellierungskorrektursignal durch Amplituden- und Phasenmodulation eines Trägers mit der Zwischenfrequenz mittels der Abtastwertfolge der zweiten Abtastung zu erzeugen und
- die Darstellung der Kopie und das Modellierungskorrektursignal synchron zu addieren.

4. Vorrichtung zum Beseitigen der Zwischenfrequenz-Echos fester Ziele in einem Radar mit kohärenten Impulsen, mit:
- einem ersten Amplituden-Phasen-Demodulator (14), der Amplituden-Abtastwerte im logarithmischen Maßstab und Phasen-Abtastwerte des Eingangssignals der Vorrichtung, das auf das Videofrequenzband zurückgeführt ist, liefert,
- einem ersten Speicher (15), der unter der Steuerung einer Ablaufsteuerschaltung (32) eine Folge von vom ersten Amplituden-Phasen-Demodulator (14) ausgegebenen Abtastwerten, die dem als Antwort auf den ersten Impuls eines Stoßes empfangenen Signal entsprechen, speichert,
- einem Hilfsoszillator (33), der einen Träger mit der Zwischenfrequenz liefert,
- einem Synthetisierer (13), der den Träger des Hilfsoszillators (33) mittels einer Folge von Amplituden- und Phasenabtastwerten, die im Speicher gespeichert ist,
hinsichtlich der Amplitude und der Phase modulieren kann, und
- einem ersten analogen Summierer (12), der das Ausgangssignal der Vorrichtung ausgibt und einen additiven Eingang, an dem er das Eingangssignal der Vorrichtung empfängt, sowie einen subtraktiven Eingang, an dem er das Ausgangssignal des Synthetisierers (13) empfängt, besitzt,
- wobei die Ablaufsteuerschaltung (32) den Speicher (15) in der Weise steuert, daß während der Dauer des als Antwort auf den ersten Impuls eines Stoßes empfangenen Signals in ihn geschrieben wird und während der Dauer jedes der Impulse eines Stoßes wiederholt aus ihm gelesen wird,
wobei die Vorrichtung dadurch gekennzeichnet ist, daß sie außerdem enthält:
- eine Verzögerungsleitung (16), die an den Eingang der Vorrichtung angeschlossen ist und das empfangene Signal um die Zeit verzögert, die für seine Verarbeitung durch den ersten Amplituden-Phasen-Demodulator (14) und durch den Synthetisierer (13) erforderlich ist, wobei der erste Speicher (15) gleichzeitig mit seinem Beschreiben gelesen wird,
- einen zweiten analogen Summierer (17), der einen additiven Eingang, der an den Ausgang der Verzögerungsleitung (16) angeschlossen ist, einen subtraktiven Eingang, der an den Ausgang des Synthetisierers (13) angeschlossen ist, sowie einen Ausgang besitzt, an den er ein Modellierungsfehlersignal ausgibt,
- einen zweiten Amplituden-Phasen-Demodulator (18), der an den Ausgang des zweiten analogen Summierers (17) angeschlossen ist und Amplituden-Abtastwerte im logarithmischen Maßstab und Phasen-Abtastwerte des auf das Videofrequenzband zurückgeführten Modellierungsfehlersignals liefert,
- einen zweiten Speicher (19) der unter der Steuerung der Ablaufsteuerschaltung (32) eine Folge von Abtastwerten speichert, die vom zweiten Amplituden-Phasen-Demodulator (18) während der Dauer des Signals ausgegeben werden, das als Antwort auf den ersten Impuls, verzögert um die Verzögerung der Verzögerungsleitung, empfangen wird, und
- einen Doppelsummierer (31), der zwischen den ersten und den zweiten Speicher (15, 19) und den Synthetisierer (13) eingefügt ist.

5. Vorrichtung nach Anspruch 4, dadurch gekennzeichnet, daß er außerdem einen dritten Speicher (30) enthält, der Mittelwerte der Amplituden- und Phasenverschiebung des Demodulators des Radars empfängt und der zum Lesen mit den ersten und zweiten Speichern (15, 19) am Eingang des Doppelsummierers (31) parallelgeschaltet ist.

6. Vorrichtung zum Entfernen der Zwischenfrequenz-Echos fester Ziele in einem Radar mit kohärenten Impulsen, mit Mitteln zum Herstellen einer Kopie des empfangenen Zwischenfrequenzsignals als Antwort auf den ersten Impuls eines Stoßes und zum Wiederholen der Kopie synchron mit den empfangenen Zwischenfrequenzsignalen als Antwort auf die dem ersten Impuls nachfolgenden Impulse eines Stoßes, und mit Mitteln zum Subtrahieren der Kopie von jedem der empfangenen Zwischenfrequenzsignale, dadurch gekennzeichnet, daß sie für die Herstellung und Wiederholung der Kopie eine Kaskade aus wenigstens zwei völlig gleichen Schaltungen (7, 8) enthält, die durch sukzessive Approximationen eine Komponente der Kopie liefern und wovon jede durch einen Hilfsoszillator (90) und eine Ablaufsteuerung (91) gesteuert wird und einen Eingang für das zu modulierende Signal, einen Ausgang für das zu modulierende Signal und einen Ausgang für ein Modellierungsfehlersignal, durch den sie in Kaskade geschaltet sind, besitzt, und mit:
- einem Amplituden-Phasen-Demodulator (75, 85), der Amplituden-Abtastwerte im logarithmischen Maßstab und Phasen-Abtastwerte des an den Eingang für das zu modulierende Signal angelegten Signals liefert, das auf das Videofrequenzband zurückgeführt ist,
- einem Speicher, der durch die Ablaufsteuerung (91) gesteuert wird und die Folge von Abtastwerten, die vom Amplituden-Phasen-Demodulator (75, 85) während der Dauer des als Antwort auf den ersten Impuls eines Stoßes empfangenen Signals ausgegeben werden, mit einer Verzögerung speichert, die die Ausbreitungsverzögerungen von Schaltung zu Schaltung kompensiert,
- einem Synthetisierer (77, 87), der den Träger des Hilfsoszillators (90) hinsichtlich der Amplitude und der Phase mittels der Folge von Abtastwerten modulieren kann, die im Speicher gespeichert sind, und mit seinem Ausgang mit dem Ausgang für das modellierte Signal der Schaltung verbunden ist,
- einer Verzögerungsleitung (74, 84), die an den Eingang für das zu modulierende Signal angeschlossen ist und das zu modulierende Signal um die Zeit verzögert, die für dessen Verarbeitung durch den Amplituden-Phasen-Demodulator (75, 85) und den Synthetisierer (77, 87) erforderlich ist, wobei der Speicher (76, 86) gleichzeitig mit seinem Beschreiben gelesen wird, und
- einem analogen Summierer (73, 83) mit einem additiven Eingang, der an die Verzögerungsleitung (74, 84) angeschlossen ist, einem subtraktiven Eingang, der an den Ausgang des Synthetisierers (77, 87) angeschlossen ist, sowie einem Ausgang, der an den Ausgang des Modellierungsfehlersignals angeschlossen ist.

## Claims

1. Method to eliminate the intermediate frequency echoes of fixed targets in a coherent pulse radar, wherein a replica of the response, in intermediate frequency band, to the first pulse of a burst is subtracted from the intermediate frequency band response to each of the subsequent pulses of the burst, characterized in that said method consists in:
- carrying out a first sampling, after demodulation, of the amplitude on a logarithmic scale and of the phase of the signal received in response to the first pulse of a burst and in synthesizing, in intermediate frequency band, a rough replica of this signal,
- carrying out a subtraction, in intermediate frequency band, of the rough replica from the signal received in response to the first pulse delayed by the time needed to prepare the rough replica to obtain a modelling error signal,
- carrying out a second sampling, after demodulation, of the amplitude on a logarithmic scale and of the phase of the modelling error signal,
- synthesizing, from the first and second sampling operations, a more precise replica, in intermediate frequency band, of the signal received in response to the first pulse of a burst, and
- subtracting this more precise replica from each of the signals received in response to the pulses of the burst subsequent to the first pulse.

2. Method according to Claim 1, characterized in that the synthesis of the more precise replica on the basis of the first and second sampling operations consists in generating a third sampling by the addition of the samples of the same rank and same type of the first and second samplings and in carrying out the amplitude and phase modulation of a carrier at the intermediate frequency by the sequence of samples of this third sampling.

3. Method according to Claim 1, characterized in that the synthesis of the more precise replica from the first and second sampling operations consists in:
- generating a rough replica by the amplitude and phase modulation of an intermediate frequency carrier by means of the sequence of samples of the first sampling,
- generating a modelling correction signal by the amplitude and phase modulation of an intermediate frequency carrier by means of the sequence of samples of the second sampling, and
- adding, in synchronism, the rough replica and the modelling correction signal.

4. Device to eliminate the intermediate frequency echoes of fixed targets in a coherent pulse radar comprising:
- a first amplitude-phase demodulator (14) giving samples of amplitude on a logarithmic scale and of phase of the input signal of the device reduced to video band,
- a first memory (15) carrying out the storage, under the control of a sequencer circuit (32) of a sequence of samples coming from the first amplitude-phase demodulator (14) corresponding to the signal received in response to the first pulse of a burst,
- a local oscillator (33) giving an intermediate frequency carrier,
- a synthesizer (13) capable of modulating the carrier of the local oscillator (33) in amplitude and phase by means of a memorized sequence of amplitude and phase samples,
- a first analog summator (12) that delivers the output signal of the device and has an additive input at which it receives the input signal of the device and a subtractive input at which it receives the output signal from the synthesizer (13), and
- said sequencer circuit (32) controlling the memory (15) so that it is written to for the duration of the signal received in response to the first pulse of a burst and read in repetition for the duration of each of the pulses of a burst, said device being characterized in that it furthermore comprises:
- a delay line (16) connected to the input of the device delaying the received signal by the time needed for its processing by the first amplitude-phase demodulator (14) and by the synthesizer (13), the first memory (15) being read simultaneously with the writing thereto,
- a second analog summator (17) that has an additive input connected to the output of the delay line (16), a subtractive input connected to the output of the synthesizer (13) and an output at which it delivers a modelling error signal,
- a second amplitude-phase demodulator (18) that is connected to the output of the second analog summator (17) and delivers samples of amplitude on a logarithmic scale and of phase of the modelling error signal reduced to video band,
- a second memory (19) carrying out the storage, under the control of the sequencer circuit (32), of a sequence of samples coming from the second amplitude-phase demodulator (18) for the duration of the signal received in response to the first pulse delayed by the lag of the delay line, and
- a double summator (31) interposed between the first and second memories (15, 19) and the synthesizer (13).

5. Device according to Claim 4, characterized in that it furthermore comprises a third memory (30) that receives mean values of amplitude and phase shift from the demodulator of the radar and is connected, in read mode, in parallel with the first and second memories (15, 19) to the input of the double summator (31).

6. Device to eliminate the intermediate frequency echoes of fixed targets in a coherent pulse radar comprising means to prepare a replica of the signal received, in intermediate frequency, in response to the first pulse of a burst and to repeat said replica in synchronism with the signals received, in intermediate frequency, in response to the pulses of a burst subsequent to the first pulse, and means to subtract said replica from each of the signals received in intermediate frequency, characterized in that, in order to prepare and repeat said replica, said device comprises a cascade of at least two identical circuits (7, 8) working by successive approximations giving a component of the replica, each of them being controlled by a local oscillator (90) and a sequencer (91) having a signal to be modelled input, a modelled signal output and a modelling error signal output by which they are cascade-connected, and comprising:
- an amplitude-phase demodulator (75, 85) giving samples of amplitude on a logarithmic scale and of phase of the signal applied to their signal to be modelled input, reduced to video band,
- a memory controlled by the sequencer (91), storing a sequence of samples coming from the amplitude-phase demodulator (75, 85) for the duration of the signal received in response to the first pulse of a burst with a delay compensating for the circuit to circuit propagation lags,
- a synthesizer (77, 87) capable of modulating the carrier of the local oscillator (90) in amplitude and in phase by the sequence of samples stored in the memory and connected at output to the modelled signal output of the circuit,
- a delay line (74, 84), that is connected to the signal to be modelled input and that delays the signal to be modelled by the time needed for its processing by the amplitude-phase demodulator (75, 85) and the synthesizer (77, 87), the memory (76, 86) being read simultaneously with the writing thereto, and
- an analog summator (73, 84) with an additive input connected to the delay line (74, 84), a subtractive input connected to the output of the synthesizer (77, 87) and an output connected to the modelling error signal output.
